# EUROPÄISCHE PATENTSCHRIFT

(11) **EP 4 112 842 B1**
(45) Veröffentlichungstag und Bekanntmachung des Hinweises auf die Patenterteilung: **15.11.2023**
(21) Anmeldenummer: 22181708.3
(22) Anmeldetag: 28.06.2022
(51) Int. Cl.: E04F 19/08, H02G 3/08

(54) **REVISIONSKLAPPENVORRICHTUNG**
INSPECTION OPENING DEVICE
DISPOSITIF TRAPPE DE RÉVISION

(30) Priorität: 30.06.2021 DE 202021002335 U
(43) Veröffentlichungstag der Anmeldung: 04.01.2023
(73) Patentinhaber: Led-Arena GmbH, 74629 Pfedelbach (DE)
(72) Erfinder: Chudalla, Waldemar, 74629 Pfedelbach (DE)
(74) Vertreter: Wimmer, Stephan

(56) Entgegenhaltungen:
- DE-A1- 3 142 938
- US-A1- 2020 153 217

## Beschreibung

Die Erfindung betrifft eine Revisionsklappenvorrichtung.

### Stand der Technik

Eine Revisionsklappe ist eine Wartungsklappe, die als Serviceöffnung den temporären Zugang zu einem dahinterliegenden Hohlraum zum Zweck der Wartung oder Inspektion ermöglicht. Ausnehmungen in Wänden oder Decken werden mit Klappen verschlossen, die sich später öffnen lassen und so die dahinter versteckten Installationen wieder sichtbar und zugänglich für eine Überprüfung, Kontrolle oder Inspektion machen.

Im Trockenbau entstehen schwer zugängliche Hohlräume, beispielsweise abgehängte Decken, die auf Schimmel- oder Schädlingsbefall geprüft werden müssen oder bei denen der Zugriff auf die Versorgungstechnik, z.B. Elektroinstallationen oder Wasserleitungen, notwendig ist. Dies wird durch die Revisionsklappe ermöglicht. Die Revisionsklappen im Trockenbau werden entweder in Stahlblech oder Leichtmetall ausgeführt oder weisen als Rahmen das gleiche Plattenmaterial wie der Rest der Trockenbaukonstruktion auf, z.B. Gipskartonplatten. Dies ermöglicht die gleiche Gestaltung für die Wand bzw. Decke und der Revisionsklappe, z.B. Spachteln und Anstreichen.

Aus DE 203 11 070 ist eine "Revisionsklappe für GK Wände / Decken" bekannt, die zur Abdeckung einer Öffnung dienen soll, die in einer Wand ausgebildet ist. Die Revisionsklappe weist einen Rahmen auf, der mit der Wand verbunden wird. In den Rahmen ist eine Tür eingesetzt, die über Scharnierwinkel an
dem Rahmen dreh- oder schwenkbar befestigt ist. Mittels des Scharniers kann die Tür geöffnet werden, wodurch die Öffnung in der Wand zugänglich wird. Allerdings erschwert die geöffnete Tür Wartungsarbeiten, weil sie den Zugang zur Öffnung behindert, insbesondere dann, wenn sie an den Scharnierwinkeln nicht um 180° derart gedreht werden kann, dass sie an der Wand anliegt.

Aus DE 20 2015 105 980 U1 ist eine "Abdeckung für eine Revisionsöffnung" bekannt, bei der in der Öffnung Magnete angeordnet sind, die eine Tür aus einem magnetischen Material halten sollen. Die Befestigung der Tür mittels Magneten ist für schwere und große Türen jedoch kaum geeignet, insbesondere dann, wenn sich die Revisionsöffnung an der Decke befindet. Ist die Tür eine große und schwere Türe, so ist die Tür bei ihrer Abnahme von der Öffnung nur mühevoll zu handhaben. Das Gewicht der - auf Grund ihrer Größe noch dazu schwer zu fassenden - Tür liegt vollständig auf dem Nutzer.

Die US 2020/153217 A1 offenbart einen "Verstellbaren Einsatzsystem für Wandschränke". Bei einer wandmontierten Gehäusebaugruppe werden einsteckbare Türbefestigungselemente verwendet, mit denen die Gehäusetür einfach und ohne den Einsatz von Werkzeugen am Hauptgehäuse des Gehäuses befestigt werden kann, und zwar so, dass die Einbautiefe der Tür leicht an die Tiefe der umgebenden Trockenwand angepasst werden kann. Nachdem das Hauptgehäuse des Schaltschranks in der Wand montiert ist, werden die einsteckbaren Befestigungselemente, die als Scharniere und Verriegelungen für die Tür dienen, in die an den vertikalen Seiten des Hauptgehäuses ausgebildeten Schlitze eingesetzt. Die einschiebbaren Befestigungsteile können bis zu einer gewünschten Tiefe eingeschoben werden, lassen sich aber erst durch Drücken einer Entriegelungslasche aus den Schlitzen herausziehen.

Die DE 31 42 938 A1 betrifft ein "Gehäuse zur Aufnahme haustechnischer Installationen". In einem aus einem oder mehreren Stücken in benötigter Länge bestehendem Gehäuse von vorzugsweise rechteckigem Querschnitt sind an einer Seite im Gehäuseinnern Befestigungsschienen angebracht, in die handelsübliche, geräuschdämmende Rohrhalterungen eingesetzt werden. Die Enden des Gehäuses und eine Seite sind offen. Die offene Gehäuseseite wird mit einem abnehmbaren Deckel geschlossen. Die offene Gehäuseseite der Befestigungsschiene liegt gegenüber und kommt nach dem Einbau des Gehäuses im Gebäude in der Ebene der Wand-, oder Fussbodenoberfläche oder der Deckenunterseite zu liegen. Die Ränder an der offenen Seite des Gehäuses sind nach innen oder außen abgewinkelt. Auf ihnen liegen Strichbleche mit L-, U- oder Z-förmigem Profil auf. Die Strichbleche sind mit Langlöchern versehen und mit den abgewinkelten Gehäusekanten verschraubt. Die Strichbleche können in Richtung der Langlöcher verschoben werden.

Nachteilig an den bekannten Revisionsklappen ist, dass die zu erreichenden Vorrichtungen hinter der Revisionsklappe nicht ortsfest lose herumliegen und daher schlecht erreich- und bearbeitbar sind. Dadurch wird eine Lokalisierung und Reproduzierbarkeit von möglichen Fehlerquellen erschwert. Auf den hängenden Leitungen liegt die gesamte Zugkraft von Bauteilen, was die Belastung der Installationen erhöht.

Aufgabe der Erfindung ist es daher, eine Vorrichtung zur Verfügung zu stellen, die eine sichere Halterung sowie eine Auffindbarkeit der von der Revisionsklappe abgedeckten Installationen ermöglicht.

### Offenbarung der Erfindung

Die Erfindung wird durch die Merkmale des Hauptanspruchs offenbart. Ausführungsformen und Weiterbildungen sind Gegenstand der sich an den Hauptanspruch anschließenden weiteren Ansprüche.

Es wird eine Revisionsklappenvorrichtung offenbart, die einen Biegebausatz zum Befestigen von elektronischen Bauteilen, Stromverteilern und Leitungen umfasst.

In dem Biegebausatz können die ansonsten losen Komponenten, die hinter der Revisionsklappe angeordnet sind, wie beispielsweise Steuerungen, Trafos oder sonstigen Gegenstände, durch das Befestigen dieser Gegenstände in bestimmten Positionen fixiert werden. Der eingebaute Biegebausatz kann durch eine Revisionsklappe abgedeckt werden. Der Biegebausatz wird als Anbau bzw. Erweiterung als Fixierhilfe an den Revisionsklappen angeordnet. Dies kann an marktüblichen Revisionsklappen, die im Trockenbau verwendet werden, erfolgen. Der Biegebausatz wird an oder hinter den Revisionsklappen verschiedener Hersteller wandbündig innenliegend verbaut. Die Anordnung des Biegebausatzes kann direkt hinter der Revisionsklappe in dem Raum oberhalb einer abgehängten Deckenvorrichtung oder aber horizontal und/oder vertikal versetzt oder weiteren Möglichkeiten erfolgen. Der Biegebausatz wird insbesondere am Außenprofil der Revisionsklappe oder beispielsweise einer Rigips-Wand insbesondere durch vorbereitete Bohrlöcher fixiert. Dies kann durch eine beispielsweise metrische Schraubverbindung oder mit einer direkten Fixierung durch Schrauben, insbesondere durch handelsübliche Bauschrauben mit Schneidekopf, Klammern bzw. Kleben, insbesondere durch doppelseitiges Klebeband, erfolgen. Der Biegebausatz ist nicht nur beim Einbau der Revisionsklappe, sondern auch leicht nachträglich installierbar. Der Biegebausatz ermöglicht somit einen Servicezugang bei Ausfällen, Fehlern oder auch der Erweiterung der Funktionen sowie die Wartung und Kontrolle der Komponenten.

Die Einbauposition des Biegebausatzes befindet sich direkt hinter der Revisionsklappe. Die Revisionsklappe selbst kann auch eine Aufputz-Revisionsklappe sein. Der Biegebausatz kann direkt an der Revisionsklappe durch Schrauben, Nieten oder Kleben angeordnet werden. Dies ist für Revisionsklappen unterschiedlicher Größe möglich. Der Biegebausatz der Revisionsklappenvorrichtung kann ebenso an einem Ständerwerk bzw. einer Halterung auf einer Unterkonstruktion der Revisionsklappen, an einer Rückwand des Hohlraums, den die Revisionsklappe abdeckt, oder an einer anderen geeigneten Position angeordnet werden. Der Biegebausatz kann entweder vorab oder im eingebauten Zustand bestückt und verdrahtet werden. Die Revisionsklappenvorrichtung weist u.a. Vorbereitungen für Klemmblöcke mit Schutzleitern und Befestigungspunkte für DIN-Schienen auf. Der Biegebausatz ermöglicht es, die Komponenten und Bauteile, die hinter der Revisionsklappe angeordnet werden sollen, in sicherem Abstand zu Dämmungseinrichtungen wie Folien und Unterkonstruktionen anzuordnen. Dies erhöht den Brandschutz durch eine feste Montage und die Möglichkeit der Fixierung der Kabel. Ein präventiver Brandschutz entsteht durch die Ausbildung eines ausreichenden Abstands zu anderen Baumaterialien.

Der Biegebausatz weist Einrichtungen zur Befestigung und Fixierung von Komponenten und elektronischen Bauteilen sowie zur Zugentlastung von Kabeln, Schläuchen und Leerrohren auf. Diese Zugentlastung erfolgt über die Befestigung der Kabel durch Fixierausleger. Diese Fixierausleger können von Hand gebogen werden. Der Fixierausleger kann insbesondere konisch ausgebildet sein und einen Kopf mit einem erweiterten Durchmesser aufweisen und kann nach innen oder außen gebogen werden. Dieser Kopf des Fixierauslegers kann nach dem Befestigen und Einbiegen ein Herausrutschen der Kabel verhindern, also als Rutschstopp dienen. Es kann beispielsweise eine Befestigung von Kabeln durch eine Fixierschelle oder mit einem Klebeband erfolgen. Es können Kabel oder Leerrohre mit Kabelbindern oder Befestigungsbändern angeordnet sein. Dies ermöglicht die Sicherung der Elektrik und die schnellere Fehlerfindung im Fehlerzustand. Zudem sind kabel- oder schlauchführende Leitungen und Bauteile, Beleuchtungseinrichtungen wie LED-Steuerungen und Leitungen, Steuerungselemente, Treiber und Netzteile sicher aufbewahrt. Weitere Bauteile, die in dem gefalteten Biegebausatz angeordnet werden können, sind außer den elektronischen Bauteilen auch pneumatische bzw. Wasser führende Bauteile. In der Biegebausatz können Bestandteile für die LED-Technik hinter der Revisionsklappe nachträglich installiert werden.

Der Biegebausatz kann plattenförmig ausgebildet sein und vorgefertigte Biegekanten aufweisen. Diese Biegekanten können gelasert oder als Stanzungen zum Umbiegen von Seitenteilen ausgebildet sein. Der Biegebausatz kann auch bereits vorgebogen ausgefertigt sein, wobei er als eine Art von Kasten bzw. Schüssel ohne Deckel ausgebildet ist. Der Biegebausatz kann dann mittels einer Anlagekante an einem Fixierrahmen angeordnet und aufgeschraubt werden. Der Biegebausatz weist Seitenteile bzw. Flügel auf. Diese Seitenteile können so um die Biegekanten gebogen werden, dass der Winkel nach der Biegung um die Biegekanten kleiner als 90° ist, so dass die Seitenteile etwas schräg in Richtung nach außen der genannten Kastenform abstehen.

Die Fixierung der einzelnen Komponenten des Biegebausatzes kann an unterschiedlichen Bereichen des Biegebausatzes erfolgen, also beispielsweise vorne / hinten / links / rechts / oben / unten innerhalb des Biegebausatzes. Der Biegebausatz kann vorbereitete Anschlüsse in bestimmten Positionierungen für Kabeldurchführungen sowie Fixierungen aufweisen. Diese weisen zur Befestigung mindestens einen Fixierausleger auf, der aufgebogen werden kann. Dadurch ist der vorbereitete Anschluss insbesondere als Kabeldurchführung bzw. auch als Fixierpunkt möglich. Die Fixierung kann insbesondere an Fixieröffnungen oder auch gekörnten Bereichen erfolgen, die eine sichtbare Markierung darstellen.

Der Biegebausatz weist Orientierungshilfen bzw. horizontale Ausrichtungshilfen in Form von angezeichneten Bestückungspunkten als Orientierungspunkte auf, um beispielsweise symmetrische Befestigungen zu ermöglichen. Diese Orientierungshilfen sind in einem vorgefertigten Raster ausgebildet. Es sind vorgefertigte Montagepunkte für Stromverteilerklemmen sowie Schutzleiter zur Erdung ausgebildet. Die Bestückungspunkte können auch als Loch oder als optische Markierungen ausgebildet sein bzw. beispielsweise eine Körnung aufweisen. Zusätzliche Beschriftungen ermöglichen eine vereinfachte Montage.

Eine Anlegekante für einen Fixierrahmen kann aus unterschiedlichen Werkstoffen ausgebildet sein, insbesondere aus Blech, Kunststoff oder Aluminium. Die Anlegekante für den Fixierrahmen ist so ausgebildet, dass sie von Hand in die benötigte Position gebogen werden kann, um die jeweilige benötigte Position der Fixierung zu erreichen. Es ist eine insbesondere vorperforierte Linie ausgebildet, um den Anlegekante für Fixierrahmen leicht von Hand biegen zu können.

Dadurch kann auch ein leichter Lauf der Revisionsklappe ermöglicht werden. Dies ermöglicht einen werkzeugfreien Aufbau und einfachen Einbau auf der Baustelle.

Die erfindungsgemäße Revisionsklappenvorrichtung hat dabei den Vorteil, dass die Komponenten hinter der angeordneten Revisionsklappe nach einem vorbereiteten Schema gesichert befestigt und fixiert werden und somit planvoll, nachvollziehbar und orientiert angeordnet sind.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigt:
- Fig. 1: zeigt einen Biegebausatz in einer isometrischen Ansicht schräg von unten und
- Fig. 2: zeigt die Revisionsklappenvorrichtung in einer isometrischen Ansicht schräg von oben.

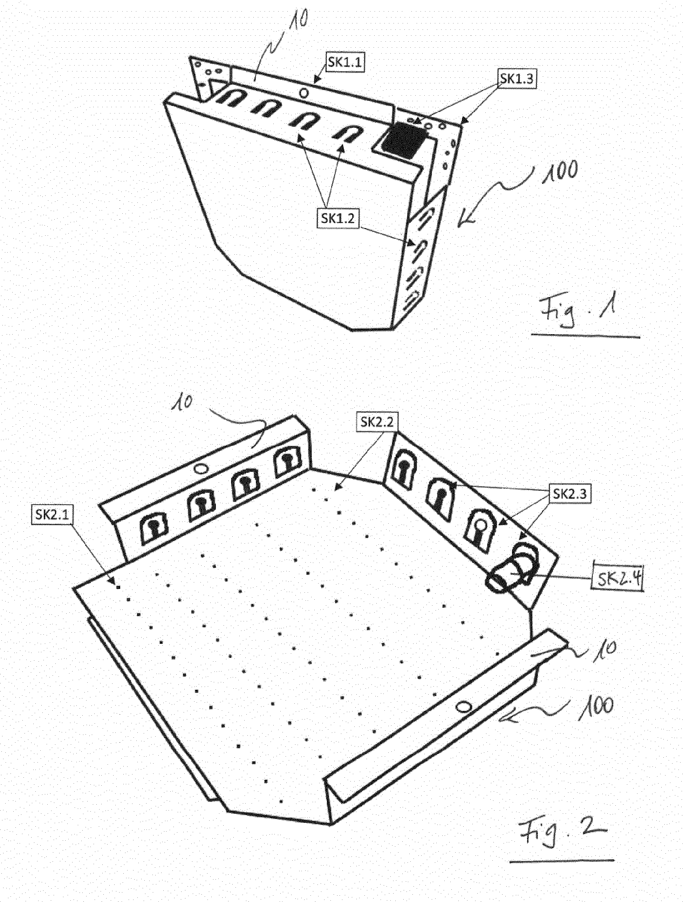

In Fig. 1 ist ein Biegebausatz 100 einer Revisionsklappenvorrichtung dargestellt. Der Biegebausatz 100 wird in diesem Ausführungsbeispiel an einem Außenprofil SK1.1 befestigt. Die Befestigung des Biegebausatzes 100 kann auch direkt an einer Rigips-Wand erfolgen.

Der Biegebausatz 100 weist eine Anlegekante 10 für Fixierrahmen auf, in dem vorbereitete Fixierungspositionen SK1.2 ausgebildet sind. Diese Anlegekante 10 für den Fixierrahmen kann beispielsweise von Hand in die benötigte Position gebogen werden, um die jeweils gewünschte Fixierungsposition SK1.2 zu erzielen.

Der Biegebausatz 100 ist als Anbau, nachträglicher Einbau bzw. Erweiterung der Funktion des hinter einer Revisionsklappe SK1.3 vorhandenen Hohlraums als Fixierhilfe an den Revisionsklappen SK1.3 angeordnet. Die Einbauposition ist direkt hinter der Revisionsklappe SK1.3. In der Biegebausatz 100 können die ansonsten losen Komponenten, die hinter der Revisionsklappe SK1.3 angeordnet sind, wie beispielsweise Kabel und Leitungen, Leerrohre, Steuerungen, Trafos oder sonstigen Gegenstände, durch das Befestigen dieser Gegenstände in bestimmten Positionen fixiert werden.

Es kann ein Zusatzteil zum Biegebausatz 100 ausgebildet sein, das als Abdecckappe ausgebildet ist und als Staubschutz dient. Dies hat den Vorteil, dass Anforderungen an die Elektrik, beispielsweise im Schiffs- oder Caravanbau, erfüllt sind.

Des Weiteren kann ein Kontaktschutz zwischen den einzelnen Komponenten und Bauteilen bzw. den Bereichen, in denen diese angeordnet werden, ausgebildet sein, um diese voneinander zu trennen. Dies kann in Form horizontal oder vertikal mittels einer Platte, einer Trennwand o.dgl. erfolgen. Es kann ein Schutzleiteranschluss zur Erdung angeordnet sein.

Fig. 2 zeigt den Biegebausatz 100 der Revisionsklappenvorrichtung von innen. Der Biegebausatz 100 weist Bestückungspunkte SK2.1 zur Halterung von Komponenten bzw. Gegenständen auf. Die Bestückungspunkte SK2.1 können im eingebauten Zustand des Biegebausatzes 100 bestückt und verdrahtet werden. Es sind Vorbereitungen für Klemmblöcke SK2.2 mit Schutzleitern sowie die Bestückungspunkte SK2.1 beispielsweise für DIN-Schienen vorhanden. Es kann ein Schutzleiteranschluss zur Erdung ausgebildet sein. Es erfolgt eine Befestigung an vorbereiteten Anschlüssen SK2.3 zur Fixierung sowie beispielsweise zur Zugentlastung von Kabeln für elektronische Bauteile, von Leerrohren mit Kabelbindern oder Befestigungsbändern. Dadurch wird die Sicherheit für die Elektrik gewährleistet. Zudem können Fehler schneller ermittelt und lokalisiert werden. Die Kabel oder schlauchführenden Leitungen für Bauteile wie Beleuchtungseinrichtungen, LED-Steuerungen, Steuerungselemente, Treiber und Netzteile können sicher aufbewahrt und befestigt werden.

Die Anlegekante 10 für den Fixierrahmen kann aus unterschiedlichen Werkstoffen ausgebildet sein, insbesondere aus Blech, Kunststoff oder Aluminium. Die Anlegekante 10 für Fixierrahmen ist so ausgebildet, dass sie beispielsweise von Hand in die benötigte Position gebogen werden kann, um die jeweilige benötigte Position der Fixierung zu erreichen. Die Fixierung der einzelnen Komponenten des Biegebausatzes 100 kann an unterschiedlichen Bereichen des Biegebausatzes 100 erfolgen, also beispielsweise vorne / hinten / links / rechts / oben / unten innerhalb des Biegebausatzes 100. Der Biegebausatz 100 kann die vorbereiteten Anschlüsse zur Befestigung SK2.3 für Kabeldurchführungen sowie zur Fixierung von Komponenten aufweisen. Diese Anschlüsse zur Befestigung SK2.3 weisen beispielsweise einen Fixierausleger SK2.4 auf, der aufgebogen wird. Dadurch ist der vorbereitete Anschluss der Befestigung SK2.3 insbesondere als Kabeldurchführung bzw. auch als Fixierpunkt möglich. Der Fixierausleger SK2.4 kann einen verbreiterten Bereich aufweisen, der als Rutschstopp dient.

### Bezugszeichenliste

- SK1.1: Außenprofil
- SK1.2: Fixierungsposition
- SK1.3: Revisionsklappe
- SK2.1: Bestückungspunkt
- SK2.2: Klemmblock
- SK2.3: Anschluss zur Befestigung
- SK2.4: Fixierausleger

- 10: Anlegekante für Fixierrahmen
- 100: Biegebausatz

## Patentansprüche

1. Revisionsklappenvorrichtung mit einer Revisionsklappe (SK1.3), wobei die Revisionsklappenvorrichtung einen Biegebausatz (100) aufweist, der als Anbau an der Revisionsklappe (SK1.3) in einem Hohlraum angeordnet ist und als Fixierhilfe dient, wobei innerhalb des Biegebausatzes (100) Komponenten und Bauteile angeordnet und in Positionen fixiert sind und dass Vorbereitungen für Klemmblöcke (SK2.2) mit Schutzleitern ausgebildet sind, wobei die Fixierung der einzelnen Komponenten und Bauteile des Biegebausatzes (100) in räumlich unterschiedlichen Bereichen innerhalb des Biegebausatzes (100) erfolgt, **dadurch gekennzeichnet dass** die unterschiedlichen Bereiche Hochvoltbereiche, Niedervoltbereiche oder SLV-Schutzkleinspannungsbereiche sind und dass Vorbereitungen für Klemmblöcke (SK2.2) mit Schutzleitern ausgebildet sind.

2. Revisionsklappenvorrichtung nach Anspruch 1, **dadurch gekennzeichnet, dass** die Komponenten Kabel, Leitungen und Leerrohre sind.

3. Revisionsklappenvorrichtung nach Anspruch 1, **dadurch gekennzeichnet, dass** die Bauteile elektronische Bauteile, Steuerungen, Trafos, Beleuchtungseinrichtungen, LED-Steuerungen, Steuerungselemente, Treiber und Netzteile sowie Kabelbinder oder Befestigungsbänder und/oder pneumatische und/oder Wasser führende Bauteile sind.

4. Revisionsklappenvorrichtung nach einem der vorhergehenden Ansprüche, **dadurch gekennzeichnet, dass** der Biegebausatz (100) Bestückungspunkte (SK2.1) zur Anordnung und Fixieren von Komponenten und Bauteilen aufweist.

5. Revisionsklappenvorrichtung nach Anspruch 4, **dadurch gekennzeichnet, dass** die Bestückungspunkte (SK2.1) im eingebauten Zustand des Biegebausatzes (100) bestückbar und verdrahtbar sind.

6. Revisionsklappenvorrichtung nach einem der vorhergehenden Ansprüche 4 oder 5, **dadurch gekennzeichnet, dass** die Bestückungspunkte (SK2.1) für DIN-Schienen ausgebildet sind.

7. Revisionsklappenvorrichtung nach einem der vorhergehenden Ansprüche, **dadurch gekennzeichnet, dass** eine Befestigung der Komponenten an vorbereiteten Anschlüssen zur Befestigung (SK2.3) zur Fixierung mit Fixierhilfen erfolgt.

8. Revisionsklappenvorrichtung nach Anspruch 7, **dadurch gekennzeichnet, dass** die Fixierhilfen als Kabelbinder, Schellen, Schlingbandschellen, Wickeldraht oder Klammern ausgebildet sind.

9. Revisionsklappenvorrichtung nach Anspruch 7, **dadurch gekennzeichnet, dass** die Anschlüsse zur Befestigung (SK2.3) einen Fixierausleger (SK2.4) aufweisen.

10. Revisionsklappenvorrichtung nach Anspruch 9, **dadurch gekennzeichnet, dass** die Fixierausleger (SK2.4) aufbiegbar ausgebildet ist.

11. Revisionsklappenvorrichtung nach einem der Ansprüche 9 oder 10, **dadurch gekennzeichnet, dass** der Fixierausleger (SK2.4) einen verbreiterten Bereich aufweist, der als Rutschstopp dient.

12. Revisionsklappenvorrichtung nach einem der vorhergehenden Ansprüche, **dadurch gekennzeichnet, dass** die Revisionsklappenvorrichtung eine Anlegekante (10) für einen Fixierrahmen aufweist.

13. Revisionsklappenvorrichtung nach Anspruch 12, **dadurch gekennzeichnet, dass** die Anlegekante (10) für Fixierrahmen in eine benötigte Position gebogen ist, um eine jeweils gewünschte Fixierungsposition (SK1.2) zu erzielen.

14. Revisionsklappenvorrichtung nach einem der Ansprüche 12 oder 13, **dadurch gekennzeichnet, dass** die Anlegekante (10) für Fixierrahmen aus unterschiedlichen Werkstoffen, Blech, Kunststoff oder Aluminium ausgebildet ist.

15. Revisionsklappenvorrichtung nach einem der vorhergehenden Ansprüche, **dadurch gekennzeichnet, dass** zwischen den unterschiedlichen Bereichen Trennwände ausgebildet sind.

16. Revisionsklappenvorrichtung nach einem der vorhergehenden Ansprüche, **dadurch gekennzeichnet, dass** ein Schutzleiteranschluss zur Erdung ausgebildet ist.

17. Revisionsklappenvorrichtung nach einem der vorhergehenden Ansprüche, **dadurch gekennzeichnet, dass** ein Zusatzteil zum Staubschutz angeordnet ist.

## Claims

1. An inspection opening device with an inspection opening (SK1.3), wherein the inspection opening device has a bending kit (100), which is arranged as an attachment to the inspection opening (SK1.3) in a cavity and serves as a fixing aid, wherein components and parts are arranged within the bending kit (100) and are fixed in positions, and wherein preparations for terminal blocks (SK2.2) with protective conductors are formed, wherein the individual components and parts of the bending set (100) are fixed in spatially different regions within the bending set (100), **characterised in that** the different regions are high-voltage regions, low-voltage regions or SLV safety extra-low voltage regions, and **in that** preparations for terminal blocks (SK2.2) with protective conductors are formed.

2. The inspection opening device according to claim 1, **characterised in that** the components are cables, lines and empty pipes.

3. The inspection opening device according to claim 1, **characterised in that** the parts are electronic parts, controllers, transformers, lighting devices, LED controllers, control elements, drivers and network parts as well as cable ties or fastening bands and/or pneumatic and/or water-conducting parts.

4. The inspection opening device according to any one of the preceding claims, **characterised in that** the bending set (100) has placement points (SK2.1) for the arrangement and fixing of components and parts.

5. The inspection opening device according to claim 4, **characterised in that** the placement points (SK2.1) can be populated and wired when the bending kit (100) is in the installed stated.

6. The inspection opening device according to one of preceding claims 4 or 5, **characterised in that** the placement points (SK2.1) are designed for DIN rails.

7. The inspection opening device according to any one of the preceding claims, **characterised in that** the components are fastened to prepared connections for fastening (SK2.3) for fixing with fixing aids.

8. The inspection opening device according to claim 7, **characterised in that** the fixing aids are formed as cable ties, clips, wrap-around strap clips, wrapping wires or clamps,

9. The inspection opening device according to claim 7, **characterised in that** the connections for fastening (SK2.3) have a fixing extension arm (SK2.4).

10. The inspection opening device according to claim 9, **characterised in that** the fixing extension arm (SK2.4) can be bent up.

11. The inspection opening device according to one of claims 9 or 10, **characterised in that** the fixing extension arm (SK2.4) has a widened region which serves as an anti-slip means.

12. The inspection opening device according to any one of the preceding claims, **characterised in that** the inspection opening device has a contact edge (10) for a fixing frame.

13. The inspection opening device according to claim 12, **characterised in that** the contact edge (10) for fixing frame is bent into a required position in order to achieve a desired fixing position (SK1.2) in each case.

14. The inspection opening device according to one of claims 12 or 13, **characterised in that** the contact edge (10) for fixing frame is formed from different materials, sheet metal, plastic or aluminium.

15. The inspection opening device according to any one of the preceding claims, **characterised in that** partition walls are formed between the different regions.

16. The inspection opening device according to any one of the preceding claims, **characterised in that** a protective conductor connection for earthing is formed.

17. The inspection opening device according to any one of the preceding claims, **characterised in that** an add-on part for dust protection is provided.

## Revendications

1. Dispositif de trappe de révision avec une trappe de révision (SK1.3), le dispositif de trappe de révision présentant un kit de pliage (100) qui est agencé dans un espace creux en tant que montage sur la trappe de révision (SK1.3) et qui sert d'aide à la fixation, des composants et des éléments étant agencés à l'intérieur du kit de pliage (100) et étant fixés dans des positions, et des préparations pour des blocs de serrage (SK2.2) étant réalisées avec des conducteurs de protection, la fixation des composants et éléments individuels du kit de pliage (100) s'effectuant dans des zones spatialement différentes à l'intérieur du kit de pliage (100), **caractérisé en ce que** les différentes zones sont des zones à haute tension, des zones à basse tension ou des zones à basse tension de protection SLV, et **en ce que** des préparations pour des blocs de serrage (SK2.2) sont réalisées avec des conducteurs de protection.

2. Dispositif de trappe de révision selon la revendication 1, **caractérisé en ce que** les composants sont des câbles, des lignes et des gaines.

3. Dispositif de trappe de révision selon la revendication 1, **caractérisé en ce que** les éléments sont des éléments électroniques, des commandes, des transformateurs, des appareils d'éclairage, des commandes LED, des éléments de commande, des entraîneurs et des blocs d'alimentation, ainsi que des attaches de câbles ou des bandes de fixation et/ou des éléments pneumatiques et/ou acheminant de l'eau.

4. Dispositif de trappe de révision selon l'une quelconque des revendications précédentes, **caractérisé en ce que** le kit de pliage (100) présente des points d'équipement (SK2.1) pour l'agencement et la fixation de composants et d'éléments.

5. Dispositif de trappe de révision selon la revendication 4, **caractérisé en ce que** les points d'équipement (SK2.1) peuvent être équipés et câblés à l'état monté du kit de pliage (100).

6. Dispositif de trappe de révision selon l'une quelconque des revendications 4 ou 5 précédentes, **caractérisé en ce que** les points d'équipement (SK2.1) sont configurés pour des rails DIN.

7. Dispositif de trappe de révision selon l'une quelconque des revendications précédentes, **caractérisé en ce qu'**une fixation des composants s'effectue sur des raccords préparés pour la fixation (SK2.3) pour la fixation avec des aides à la fixation.

8. Dispositif de trappe de révision selon la revendication 7, **caractérisé en ce que** les aides à la fixation sont réalisées sous forme d'attaches de câbles, de colliers de serrage, de colliers de serrage à boucle, de fils de bobinage ou d'agrafes.

9. Dispositif de trappe de révision selon la revendication 7, **caractérisé en ce que** les raccords pour la fixation (SK2.3) présentent un bras de fixation (SK2.4).

10. Dispositif de trappe de révision selon la revendication 9, **caractérisé en ce que** le bras de fixation (SK2.4) est configuré de manière à pouvoir être plié.

11. Dispositif de trappe de révision selon l'une quelconque des revendications 9 ou 10, **caractérisé en ce que** le bras de fixation (SK2.4) présente une zone élargie qui sert d'arrêt de glissement.

12. Dispositif de trappe de révision selon l'une quelconque des revendications précédentes, **caractérisé en ce que** le dispositif de trappe de révision présente un bord d'appui (10) pour un cadre de fixation.

13. Dispositif de trappe de révision selon la revendication 12, **caractérisé en ce que** le bord d'appui (10) pour cadre de fixation est plié dans une position requise pour obtenir une position de fixation (SK1.2) souhaitée respective.

14. Dispositif de trappe de révision selon l'une quelconque des revendications 12 ou 13, **caractérisé en ce que** le bord d'appui (10) pour cadre de fixation est réalisé en différents matériaux, tôle, matière plastique ou aluminium.

15. Dispositif de trappe de révision selon l'une quelconque des revendications précédentes, **caractérisé en ce que** des parois de séparation sont réalisées entre les différentes zones.

16. Dispositif de trappe de révision selon l'une quelconque des revendications précédentes, **caractérisé en ce qu'**un raccord de conducteur de protection est réalisé pour la mise à la terre.

17. Dispositif de trappe de révision selon l'une quelconque des revendications précédentes, **caractérisé en ce qu'**une pièce supplémentaire est agencée pour la protection contre la poussière.
